# EUROPEAN PATENT APPLICATION

(11) **EP 4 852 546 A1**
(43) Date of publication of application: **09.12.2026**
(21) Application number: 25751323.4
(22) Date of filing: 24.01.2025
(51) Int. Cl.: H04W 56/00

(54) **CLOCK FREQUENCY ADJUSTMENT METHOD, ELECTRONIC DEVICE, AND STORAGE MEDIUM**

(30) Priority: 08.02.2024 CN 202410178265
(71) Applicant: ZTE CORPORATION, Shenzhen, Guangdong 518057 (CN)
(72) Inventor: SHEN, Shaowu, Shenzhen, Guangdong 518057 (CN); HU, Hailin, Shenzhen, Guangdong 518057 (CN)
(74) Representative: Ziebig Hengelhaupt Intellectual Property Attorneys Patentanwaltskanzlei PartGmbB
(86) International application number: PCT/CN2025/074546
(87) International publication number: WO 2025/167721

(57) **Abstract**

The present application provides a clock frequency adjustment method, an electronic device, and a storage medium. The clock frequency adjustment method comprises: first obtaining positioning performance parameters of a terminal device; and when the positioning performance parameters do not meet a preset condition, obtaining the current terminal state information and/or scenario detection information of the terminal device, and performing compensation adjustment on the clock frequency of the terminal device on the basis of the terminal state information and/or the scenario detection information.

## Description

### CROSS REFERENCE TO RELATED APPLICATIONS

This application claims priority to Chinese Patent Application No. 202410178265.4 filed on February 08, 2024, entitled "Clock Frequency Adjustment Method, Electronic Device, and Storage Medium", the entirety of which is incorporated herein by reference.

### TECHNICAL FIELD

The embodiments of the present application relate to the field of clock frequency adjustment, and in particular, to a clock frequency adjustment method, an electronic device, and a storage medium.

### BACKGROUD

With advancement of mobile communication and positioning technologies, positioning services on mobile phones have become one of the most promising businesses. The traditional independent Global Navigation Satellite System (GNSS) positioning, assisted by base stations and supported by the mobile network, has formed the current positioning method mainly based on Assisted Global Positioning System (AGPS) positioning.

The requirement for high-precision positioning is higher and higher with the growing demand for in-vehicle navigation and autonomous driving. High-precision positioning requires positioning accuracy within sub-meter or even centimeter level. High-precision positioning requires strict time synchronization between GPS and wireless network of the base stations, however, during actual operation, a terminal device may experience a delay or drift of several milliseconds due to its own clock frequency deviation. A time error caused by time asynchronization may cause increase of the positioning error and reduction of the positioning precision,, while the cellular and Wireless Fidelity (WiFi) performance of the terminal device may also be affected. How to provide a comprehensive and adaptive high-precision clock frequency adjustment method has become a technical problem to be solved.

### SUMMARY

Embodiments of the present application provide a clock frequency adjustment method, an electronic device, and a storage medium.

In a first aspect, embodiments of the present application provide a clock frequency adjustment method, the method includes: obtaining a positioning performance parameter of a terminal device; and upon the condition that the positioning performance parameter does not meet a preset condition, obtaining current terminal state information and/or scenario detection information of the terminal device, and performing compensation adjustment on the clock frequency of the terminal device based on the terminal state information and/or the scenario detection information.

In a second aspect, embodiments of the present application provide an electronic device, including: one or more processors; a memory having stored thereon one or more programs, the one or more programs, when executed by the one or more processors, cause the one or more processors to implement the clock frequency adjustment method of the first aspect.

In a third aspect, embodiments of the present application provide a computer-readable storage medium having stored thereon a computer program, the program, when executed by a processor, implements the clock frequency adjustment method of the first aspect.

### BRIEF DESCRIPTION OF THE DRAWINGS

The drawings are used to provide further understanding of technical solution of the present application and constitute a part of the description, and are used to explain technical solution of the present application together with embodiments of the present application, but do not constitute a limitation on technical solution of the present application.
FIG. 1 is a schematic flow chart of a clock frequency adjustment method provided in embodiments of the present application.
FIG. 2 is a schematic flow chart of a clock frequency adjustment method provided in embodiments of the present application.
FIG. 3 is a schematic diagram of a clock frequency adjustment method provided in embodiments of the present application.
FIG. 4 is a schematic diagram of a trim offset compensation adjustment mode provided in embodiments of the present application.
FIG. 5 is a schematic diagram of a multi-frequency joint adjustment mode provided in embodiments of the present application.
FIG. 6 is a schematic diagram of a cumulative error adjustment mode provided in embodiments of the present application.
FIG. 7 is a schematic diagram of a multi-scenario adjustment mode provided in embodiments of the present application.
FIG. 8 is a schematic diagram of a clock information library provided in embodiments of the present application.
FIG. 9 is a schematic flow chart of a clock frequency adjustment method provided in embodiments of the present application.
FIG. 10 is a schematic structural diagram of an electronic device provided in embodiments of the present application.

### DETAILED DESCRIPTION

In order to clarify the objects, technical solutions and advantages of the present application, the present application will be further explained in detail below in conjunction with the accompanying drawings and embodiments. It should be understood that the specific embodiments described here are merely used to illustrate the present application and not intended to be limiting.

It should be understood that in the description of the embodiments of the present application, the terms "first", "second", etc., are used merely for the purpose of distinguishing between different technical features, it cannot be understood as indicating or implying relative importance, or implicitly indicating the number of the technical features indicated or implicitly indicating the precedence relationship of the technical features indicated. The term "at least one" means one or more, and the term "a plurality of" means two or more than two. The term "and/or" describes the association relationship of associated objects, indicating that there may be three relationships, for example, A and/or B may include the following three situations: A alone, A and B together, B alone. A and B may be singular or plural. The character "/" generally indicates that the objects associated therewith before and after are in an "or" relationship. "At least one of the following" and similar expressions mean any combination of these items, including any combination of single items or a plurality of items. For example, at least one of a, b, and c may indicate: a, b and c; a and b; a and c; b and c; or a, b and c; wherein a, b, and c may be single or multiple.

In addition, the technical features involved in the various embodiments of the present application described below may be combined with each other as long as they do not conflict with each other.

With advancement of mobile communication and positioning technologies, positioning services on mobile phones have become one of the most promising businesses. The traditional independent Global Navigation Satellite System (GNSS) positioning, assisted by base stations and supported by the mobile network, has formed the current positioning method mainly based on Assisted Global Positioning System (AGPS) positioning.

The GPS positioning system consists of three parts: satellite constellation, a ground monitoring system, and a terminal device. The terminal device observes distances to at least four navigation satellites to calculate the real-time position thereof. A GPS receiving circuit of the terminal device consists of a GPS receiving chip, a front-end filter, a Low Noise Amplifier (LNA), a rear-stage filter, an antenna module, and a clock circuit module, the front stage of the clock circuit module may be a crystal oscillator (XO), a temperature-compensated crystal oscillator (TCXO), a voltage-controlled temperature-compensated crystal oscillator (VCTCXO), or an oven-controlled crystal oscillator (OCXO). Considering the cost, an ordinary crystal oscillator XO is most commonly used, and the rear stage of a clock circuit module may be a phase-locked loop (PLL) and a frequency division module.

Although the crystal oscillator has a certain resonant frequency, such as 76.8 MHz, the crystal oscillator does not always work at this frequency, but generates a certain frequency offset. Measured in parts per million (PPM), for example, the initial frequency offset is 50 PPM, if the frequency offset is beyond a certain threshold range, some modules of the terminal device cannot work normally, causing the terminal unable to register on the network, perform GPS positioning, or perform WiFi demodulation. For different batches of terminal devices, differences in crystal incoming material batches, models, and tolerances of peripheral capacitors and resistors may cause changes in the crystal load capacitance, thereby causing frequency offset. At the same time, even for the same terminal device during operation, the crystal oscillator will also experience frequency offset due to temperature effects.

The requirement for high-precision positioning is higher and higher with the growing demand for in-vehicle navigation and autonomous driving. High-precision positioning requires positioning accuracy within sub-meter or even centimeter level. High-precision positioning requires strict time synchronization between GPS and wireless network of the base stations, however, during actual operation, a terminal device may experience a delay or drift of several milliseconds due to its own clock frequency deviation. A time error caused by time asynchronization may cause increase of the positioning error and reduction of the positioning precision,, while the cellular and Wireless Fidelity (WiFi) performance of the terminal device may also be affected. How to provide a comprehensive and adaptive high-precision clock frequency adjustment method has become a technical problem to be solved.

On such basis, embodiments of the present application provide a clock frequency adjustment method, an electronic device, and a storage medium, which can achieve adaptive adjustment of clock frequency deviation.

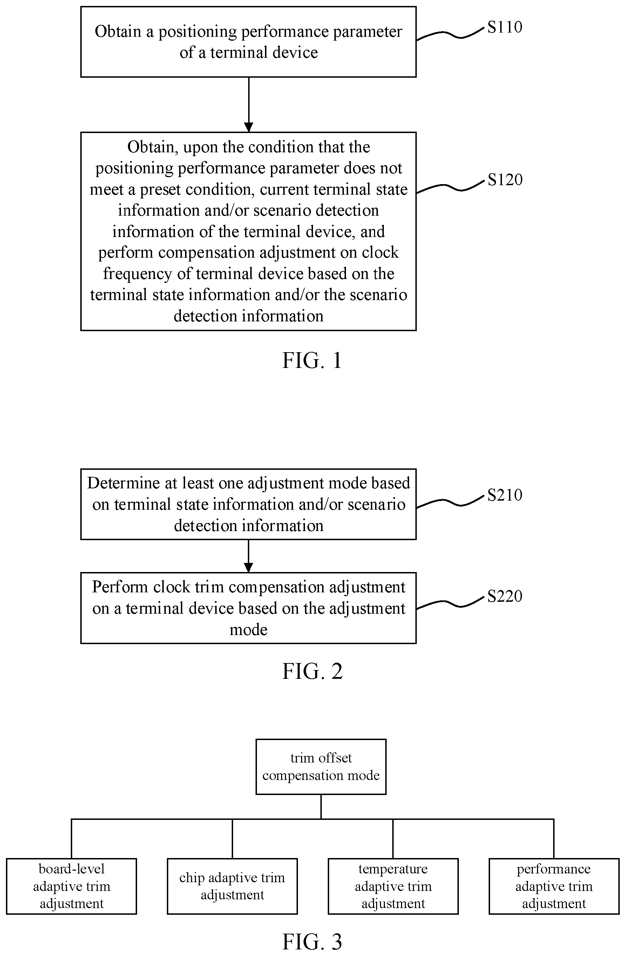

The embodiments of the present application firstly propose a clock frequency adjustment method, which may be applied to a terminal device with a positioning function. In some embodiments, the terminal device may be a handheld device, a vehicle-mounted device, etc., such as a mobile phone, a tablet computer, a laptop computer, a palmtop computer, a wearable device, a vehicle-mounted computer, etc. Please refer to FIG. 1, which shows a schematic flowchart of a clock frequency adjustment method provided in embodiments of the present application, as shown in FIG. 1, the clock frequency adjustment method includes, but is not limited to, step S110 and step S120.

At step S110: a positioning performance parameter of the terminal device is obtained.

It can be understood that the positioning performance parameter is a GNSS positioning performance parameter of the terminal device. The positioning performance parameter of the terminal device is obtained and used to measure the current positioning performance of the terminal device, such as the speed of positioning, the accuracy of positioning, etc.

In some embodiments, the positioning performance parameter includes at least one of the following: time to first fix, cold start time, hot start time, the positioning accuracy, the positioning trajectory offset, the number of positioning satellites, and the carrier-to-noise ratio.

Correspondingly, the clock frequency adjustment method further includes that the positioning performance parameter is compared with a preset positioning performance threshold, and whether the positioning performance parameter meets the preset condition is determined according to the comparison result.

It can be understood that the time to first fix (TTFF) refers to the time required for the terminal device, as a receiver, from startup to successfully obtain positioning information for the first time; the cold start time refers to the time required for the receiver to successfully obtain positioning information for the first time when the receiver is restarted after being unused for a long time or moving to a new area; the hot start time refers to the time required for the receiver to successfully obtain positioning information for the first time when the receiver is restarted within a relatively short period of time while retaining some satellite information; the positioning accuracy refers to the accuracy of the measured position, usually expressed by the error in the horizontal and vertical directions; the positioning trajectory offset refers to the trajectory deviation generated by the positioning system when tracking an object; the number of positioning satellites refers to the number of satellites used in the positioning system to assist the terminal device in positioning; and the carrier-to-noise ratio (CN0) refers to the ratio of the satellite signal strength received by the terminal device to the background noise, and a higher carrier-to-noise ratio generally indicates higher signal quality.

After obtaining the current positioning performance parameter of the terminal device, the positioning performance parameter is compared with the corresponding positioning performance threshold to determine whether the current positioning performance of the terminal device can meet the requirements. For example, the current hot start time of the terminal device is obtained and compared with a preset hot start time threshold, if the hot start time is too long, i.e., the terminal device positioning speed is slow, then corresponding clock frequency adjustment needs to be performed on the terminal device.

It should be noted that the above collected values are sent by the satellite, pass through the GPS receiving antenna, front-end filter, LNA, and rear-stage filter of the terminal device to the RF chip of the built-in GPS receiver, then transmitted to the baseband chip, and then to the AP processor for processing, and finally can be reported as direct UI interface parameter values.

At step S120, upon the condition that the positioning performance parameter does not meet a preset condition, current terminal state information and/or scenario detection information of the terminal device is obtained, and compensation adjustment is performed on clock frequency of terminal device based on the terminal state information and/or the scenario detection information.

In the embodiments of the present application, when the positioning performance of the terminal device does not meet the preset condition, the current terminal state and scenario of the terminal device are detected. According to the current state information and scenario information of the terminal device, adaptive clock frequency adjustment is performed on the terminal device in a dynamic compensation adjustment manner. Clock calibration is converted from traditional factory calibration to terminal self-adaptive calibration, the terminal device can perform clock frequency self-adjustment in the live network and the current scenario, without relying on traditional factory clock calibration parameters any longer, and the problem of poor positioning performance and communication performance of the terminal device caused by clock frequency deviation can be solved, so that the terminal device can obtain optimal positioning performance even in extreme environments or weak signal scenarios.

In some embodiments, the scenario detection information includes at least one of the following: terminal ambient temperature, network environment information, positioning satellite information, terminal motion state information, and terminal scenario information.

It should be noted that the terminal ambient temperature includes board-level temperature of the terminal device, crystal temperature, and ambient temperature of the environment where the terminal device is located; the network environment information refers to the network system information currently used by the terminal device, such as 2G, 3G, LTE, or NR; the positioning satellite information refers to the type of positioning satellite currently used by the terminal device and the operating frequency point, with positioning satellite types such as GPS, GLONASS, QZSS, Galileo, and BeiDou, and operating frequency points such as L1, L2, L5, or combinations thereof; the terminal motion state information includes a stationary working state and a moving working state, with the stationary working state such as positioning and satellite signal transceiving, and the moving working state such as navigation and satellite signal transceiving during movement; and the terminal scenario information includes occlusion conditions, such as full sky, half sky, canyon, or indoor, and special locations such as elevated roads, tunnels, and bridges.

In some cases, the board-level temperature and ambient temperature can be detected by a thermal device or temperature sensor built into the terminal device, the current network mode of the terminal device can be detected by a network system detection module, the type of positioning satellite currently used by the terminal device and the operating frequency point can be identified by a satellite identification interface, the indoor/outdoor scenario where the terminal device is currently located can be identified by a longitude/latitude positioning module, the altitude difference where the terminal device is currently located can be identified by an altimeter, and the current surrounding environment of the terminal device can be identified by terminal components such as a front-facing camera, a rear-facing camera, a light sensor, or a proximity sensor.

It can be understood that when the terminal device is in different environments and scenarios, the requirements for GPS clock accuracy differ. The higher the positioning accuracy, the more complex the positioning scenario, and the harsher the positioning environment, the higher the requirements for clock frequency deviation. Therefore, the adjustment mode to be invoked for the current scenario of the terminal device can be determined based on the obtained scenario detection information, and the corresponding clock trim adjustment operation can be performed based on the adjustment mode, to further reduce the clock frequency deviation and achieve adaptation to high-precision positioning scenarios.

In some embodiments, please refer to FIG. 2, which shows a schematic flowchart of a clock frequency adjustment method provided by embodiments of the present application, as shown in FIG. 2, trim compensation adjustment is performed on the clock frequency of the terminal device based on the terminal state information and/or the scenario detection information includes step S210 and step S220.

At step S210: at least one adjustment mode is determined based on the terminal state information and/or the scenario detection information.

At step S220: clock trim compensation adjustment is performed on the terminal device based on the adjustment mode.

It should be noted that "trim" refers to a module used to adjust the clock frequency in the oscillator circuit, and "trim value" refers to a fine-tuning parameter used to adjust the clock frequency. By fine-tuning the trim value, the oscillator can be calibrated to the expected operating frequency. Fine-tuning the trim can be achieved by changing the capacitance or resistance value in the oscillator circuit. Upon the condition that the positioning performance parameter does not meet the preset condition, the clock frequency of the crystal oscillator in the terminal device needs to be adjusted. In the embodiments of the present application, the current terminal state information and/or scenario detection information of the terminal device is first obtained, at least one adjustment mode is determined based on the current terminal state and/or the scenario where the terminal device is located, and the clock frequency of the terminal device is adjusted in a trim dynamic compensation adjustment manner based on the adjustment mode, thereby converting the clock trim value adjustment from traditional static invocation to dynamic adjustment.

It can be understood that upon the condition that the current positioning performance parameter of the terminal device does not meet the preset condition, the current terminal state information and/or scenario detection information of the terminal device is obtained, and based on the obtained terminal state information and/or scenario detection information, the cause of the poor positioning performance of the terminal device is determined and the corresponding adjustment mode is determined accordingly. On one hand, the adjustment mode for the terminal device may be determined based only on the current terminal state information, or only on the current scenario detection information, or on both the current terminal state information and the scenario detection information; on the other hand, there may be a plurality of adjustment modes determined based on the terminal state information and/or scenario detection information, and the clock trim compensation adjustment for the terminal device may be a single adjustment or a joint adjustment. For example, one adjustment mode is determined based on the terminal state information and/or scenario detection information, but after the clock trim compensation adjustment is performed on the terminal device based on the single adjustment mode, the positioning performance still cannot meet the requirements, then a plurality of other adjustment modes can be used for joint adjustment until the positioning performance can meet the requirements. As another example, if a plurality of adjustment modes are determined based on the terminal state information and/or scenario detection information, a plurality of adjustment modes can be used simultaneously to perform joint compensation adjustment on the clock trim value of the terminal device.

In some embodiments, the terminal state information includes a clock frequency parameter, and the clock frequency parameter includes at least one of the following: a coarse calibration clock value, a fine calibration clock value, a self-calibration clock value, an extreme temperature clock value, a cellular frequency error value, a wireless frequency error value, or a multi-frequency positioning frequency error value.

Correspondingly, determining at least one adjustment mode based on the terminal state information and/or the scenario detection information includes that a clock frequency deviation parameter is compared with a preset frequency deviation threshold, and at least one adjustment mode is determined based on the comparison result.

It should be noted that obtaining a coarse calibration clock value requires a non-high temperature (e.g., room temperature 25°C), or an initial crystal temperature compensation below 45°C, with the RF power amplifier module not operating; the frequency error is changed by setting the trim value, and an initial trim value is obtained by coarse calibration, i.e., the coarse calibration clock value. Obtaining a fine calibration clock value requires driving the RF module to operate, heating the terminal board so that the power amplifier generates heat, forming a temperature-frequency curve, and measuring the relationship between the crystal oscillator's clock frequency and temperature. In addition, the power amplifier operates at maximum power. Moreover, fine calibration also includes DC calibration, and by further adjusting the trim value and the DC offset value, the clock frequency offset is reduced to within +/- 2 ppm, finally the fine calibration clock value is obtained. The live-network self-calibration clock value refers to the clock frequency deviation calibration value obtained by self-calibration in the current network environment; the extreme temperature clock value refers to the clock frequency deviation value and trim compensation value when the terminal device operates in an environment above 60°C or below -10°C; the cellular frequency error value refers to the frequency error value of the terminal device under different cellular network systems during operation, such as under NR, LTE, WCDMA, CDMA, and GSM; the wireless frequency error value refers to the frequency error value of the terminal device under different wireless modes during operation, such as under WiFi and Bluetooth; the multi-frequency positioning frequency error value refers to the frequency error value of the terminal device under different positioning satellite frequency bands during operation, such as under GPS, GLONASS, QZSS, SBAS, Galileo, BeiDou and other positioning satellites, and under L1, L2, L5 and other frequency bands. By collecting the above clock frequency parameters and comparing them with corresponding target thresholds, if the clock frequency parameters exceed the target thresholds, corresponding adjustment modes can be determined for different frequency deviation types.

It should be noted that one-to-one XO crystal calibration can be performed on each terminal by certain programs and calibration scripts. The clock source may be XO, TCXO, or VCTCXO, the purpose of calibration is to obtain the crystal frequency and the operating temperature of the terminal device, clock calibration needs to be based on a specific system such as 1X/GSM/WCDMA/LTE/NR, and various clock parameter values are obtained based on certain frequency bands, channels, receiving frequency points and offset values, sampling quantity, sampling time, temperature range, calibration programs and scripts.

In some embodiments, the adjustment mode is a trim offset compensation mode, and clock trim compensation adjustment is performed on the terminal device based on the adjustment mode includes at least one of steps S310 to S340.

At step S310, a board calibration reference range of the terminal device is obtained, and when a current clock trim value of the terminal device is beyond the board calibration reference range, clock trim compensation adjustment is performed on the terminal device by adjusting a variable capacitor of a trim adjustment circuit in the terminal device.

At step S320, a chip trim standard value corresponding to a crystal oscillator of the terminal device is obtained, and clock trim compensation adjustment is performed on the terminal device based on the chip trim standard value;

At step S330: a temperature parameter of the terminal device is obtained, and clock trim compensation adjustment is performed on the terminal device based on the temperature parameter.

At step S340: performance requirement information of the terminal device is obtained, and clock trim compensation adjustment is performed on the terminal device based on the positioning performance requirement information.

It should be understood that coarse calibration is performed on the terminal device to obtain an initial trim value, then whether the initial trim value is within a preset range is determined, and if the initial trim value is not within the preset range, it may be considered that the poor current positioning performance of the terminal device is related to trim offset. When it is detected that the current positioning performance of the terminal device is poor and related to trim offset, the terminal device enters a trim offset compensation mode and performs clock trim compensation adjustment based on the trim offset compensation adjustment mode. Referring to FIG. 3, FIG. 3 shows a schematic diagram of a trim offset compensation adjustment mode provided in embodiments of the present application, as shown in FIG. 3, the trim offset compensation adjustment mode includes board-level adaptive trim adjustment, chip adaptive trim adjustment, temperature adaptive trim adjustment, and performance adaptive trim adjustment.

In the board-level adaptive trim adjustment in step S310, it should be noted that after clock calibration of the crystal oscillator, a trim NV value is generated, and the trim value may range from 0 to N, e.g., N = 64. Due to differences in crystal batches, external resistor-capacitor device deviations, and trace parasitic capacitance, the trim values corresponding to different terminal devices also vary, but there is an optimal range for the same platform, such as 35 to 45, denoted as the board calibration reference range. if the clock trim value of the terminal device is beyond the board calibration reference range, the performance of the crystal oscillator becomes abnormal. Therefore, the board calibration reference range of the terminal device is obtained, and when the current clock trim value of the terminal device is beyond the board calibration reference range, the output capacitance and input capacitance of the crystal oscillator are adjusted by adjusting the variable capacitor of the trim adjustment circuit in the terminal device, so as to restore the trim value back to the adjustable range, thereby solving the problem of the crystal oscillator's trim value being at the upper or lower limit.

In the chip adaptive trim adjustment in step S320, corresponding chip trim standard values are pre-configured for crystal oscillators with different parameters such as crystal model, brand, package size, and parasitic capacitance of the terminal device. In the trim offset compensation adjustment, the trim value suitable for the terminal device is automatically matched and trim compensation adjustment is performed accordingly. In some cases, the chip trim standard value corresponding to the crystal oscillator of the terminal device is obtained, and clock trim compensation adjustment is performed on the terminal device based on the chip trim standard value, thereby enabling dynamic adaptation of different trim compensation values based on different crystal models, different traces, parasitic parameters, and wiring deviations.

In the temperature adaptive trim adjustment in step S330, the temperature parameter of the terminal device is obtained, and the current trim value of the terminal device is adjusted in real time based on the temperature parameter, the temperature parameter of the terminal device may be the board-level temperature, ambient temperature, or frequency-temperature curve. In some cases, the corresponding target trim value may be obtained based on the board-level temperature, ambient temperature, or frequency-temperature curve of the terminal device, and trim compensation adjustment is performed on the terminal device based on the target trim value.

In the performance adaptive trim adjustment in step S340, the positioning performance requirement information of the terminal device is obtained, and clock trim compensation adjustment is performed on the terminal device based on the positioning performance requirement information. Exemplarily, based on the live-network positioning performance and call/network searching capability requirements, the current trim value of the terminal device is adjusted in real time by dynamic frequency error collection, for example, if the current positioning performance requirement of the terminal device is lane-level navigation, the trim adjustment strength is increased to reduce the trim offset; if the current positioning performance requirement of the terminal device is sub-meter/centimeter-level positioning, the trim adjustment strength is further increased to reduce the trim offset as much as possible.

In some embodiments, the adjustment mode is a temperature control adjustment mode, and clock trim compensation adjustment is performed on the terminal device based on the adjustment mode includes step S410 or step S420.

At step S410: upon the condition that the temperature of the terminal device is higher than a first preset temperature threshold, cooling driving is performed on the terminal device and clock trim compensation adjustment is performed on the terminal device.

At step S420: upon the condition that the temperature of the terminal device is lower than a second preset temperature threshold, heating driving is performed on the terminal device and clock trim compensation adjustment is performed on the terminal device.

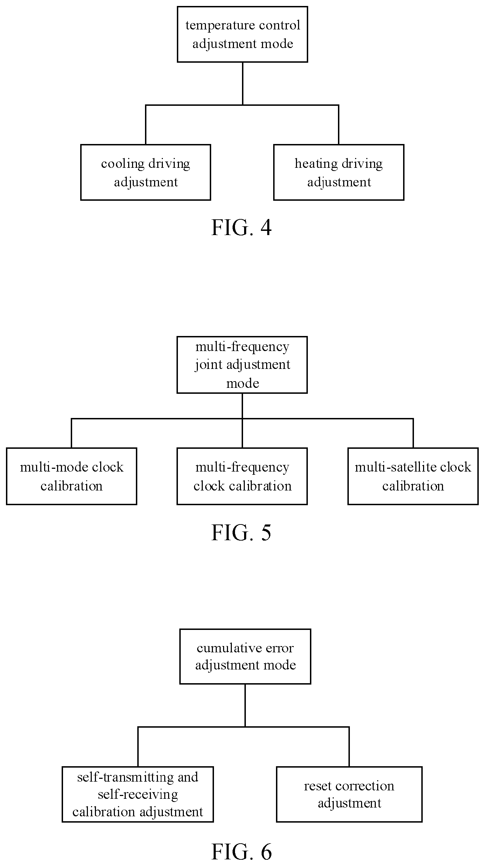

It can be understood that, referring to FIG. 4, FIG. 4 shows a schematic diagram of a temperature control adjustment mode provided in embodiments of the present application, as shown in FIG. 4, the temperature control adjustment mode includes cooling driving adjustment and heating driving adjustment. In the cooling driving adjustment, when the temperature of the terminal device is higher than the first preset temperature threshold, cooling driving is performed on the terminal device and clock trim compensation adjustment is performed on the terminal device; or in the heating driving adjustment, when the temperature of the terminal device is lower than the second preset temperature threshold, heating driving is performed on the terminal device and clock trim compensation adjustment is performed on the terminal device.

In an embodiment, the first preset temperature threshold is greater than the second preset temperature threshold. Exemplarily, based on actual application, the first preset temperature threshold is pre-configured as 50°C and the second preset temperature threshold as 5°C, when it is detected that the temperature of the terminal device is above 50°C, cooling driving adjustment is performed; when it is detected that the temperature of the terminal device is below 5°C, heating driving adjustment is performed.

It should be noted that the extreme operating temperature of the terminal device generally ranges from -30°C to 85°C, with the middle temperature being 30°C.Before calibration of the crystal oscillator, the frequency deviation of the crystal oscillator at 30°C is +/- 50 ppm, if the temperature changes, the clock frequency deviation will increase by another +/- 12 ppm. For smartphones, the board-level temperature during coarse calibration is below 45°C, and during fine calibration it does not exceed 60°C. As usage environments become more complex, when a mobile phone is in an ambient temperature of 40°C, its board-level temperature may exceed 60°C or even higher, and in relatively cold weather, the temperature of the mobile phone may fall below 0°C, or even as low as -30°C. In extremely hot or extremely cold environments, the temperature is beyond the optimal operating range of the crystal clock, while the speed of live-network self-calibration or frequency correction is slow and inefficient, resulting in significant errors in positioning and navigation. Therefore, it is important to improve the accuracy of clock calibration, the coverage of the temperature range during clock frequency calibration and the real-time monitoring of board-level and ambient temperatures.

In another embodiment, when the poor positioning performance of the terminal device is related to trim offset, the terminal device enters a trim offset compensation mode and performs clock trim compensation adjustment based on the trim offset compensation adjustment mode, and after the trim compensation adjustment, the terminal device enters a temperature control adjustment mode, precise calibration and high/low temperature adjustment is performed on the terminal device to obtain the optimal calibration parameters.

In the cooling driving adjustment in step S410, when the positioning performance of the terminal device is poor, the current crystal frequency deviation of the terminal device is detected, if the crystal frequency deviation exceeds a preset threshold, the current crystal temperature of the terminal device is further detected, when it is detected that the current crystal temperature of the terminal device is too high, cooling driving is performed to reduce the temperature around the crystal, in some cases, a plurality of thermal temperature sensors disposed on the terminal device may be used to detect a heat source, determine the terminal device components or modules associated with the heat source, and cool them.

In an embodiment, performing cooling driving on the terminal device includes any one or more of the following: reducing the operating frequency of a processor, reducing the power of a wireless module, activating an active heat dissipation module, or disabling the wireless module, i.e., main frequency driving adjustment, power driving adjustment, active heat dissipation adjustment, or mandatory intervention adjustment, respectively.

In main frequency driving adjustment, the frequency of the Central Processing Unit (CPU) or Graphics Processing Unit (GPU) is reduced based on the current service scenario, for example, when a smartphone is running a game, the GPU frequency is reduced or directly locked until the temperature drops and the clock frequency deviation recovers to a preset threshold.

In power driving adjustment, the power amplifier (PA) power of the cellular or wireless module of the current terminal device is first detected, if the PA power of the cellular or wireless module is highest or relatively high, the transmission power of the PA is gradually reduced in a stepped way as required, until the temperature drops and the clock frequency deviation recovers to the preset threshold.

In active heat dissipation adjustment, by controlling the miniature fan, liquid cooling heat dissipation module, or semiconductor refrigeration heat sink of the terminal, the turbine air duct is aligned with the heating device or clock crystal for active heat dissipation.

In mandatory intervention adjustment, when the terminal device has a clock frequency deviation and the current temperature is too high, and other heating modules are also operating, the 2/3/4/5G cellular, WiFi, Bluetooth, NFC, UWB and other wireless modules may be forcibly disabled to reduce the board-level temperature until the temperature drops and the clock frequency deviation recovers to a preset threshold.

In an embodiment, performing heating driving on the terminal device includes any one or more of controlling the cellular module to enter a continuous transmission state or controlling the WiFi module to enter a continuous transmission state.

In the heating driving adjustment in step S420, when the positioning performance of the terminal device is poor, the current crystal frequency deviation of the terminal device is detected, if the crystal frequency deviation exceeds a preset threshold, the current crystal temperature of the terminal device is further detected, when it is detected that the current crystal temperature of the terminal device is too low, the temperature around the crystal is raised. In some cases, the cellular transmission chip and power amplification module on the terminal device may be driven to enter a continuous transmission state, such as driving LTE, NR, GSM or CDMA, WCDMA continuous transmission, if the cellular transmission chip is already in a working state, the WiFi chip may be driven to enter a continuous transmission state, so as to allow the terminal device to quickly rise to a specific temperature in a short time, thereby achieving the purpose of crystal frequency calibration in a specific temperature range.

In one embodiment, upon the condition that the terminal device is in the temperature control adjustment mode, the clock frequency adjustment method further includes that: the temperature of the terminal device is sampled, and based on a temperature sampling result, the temperature of the terminal device is controlled, during cooling driving or heating driving to change in a stepped way at a preset interval; and upon the condition that a clock trim temperature compensation value of the terminal device does not meet a preset condition, a clock calibration duration is adjusted, and clock trim compensation adjustment is performed on the terminal device based on the adjusted clock calibration duration until each temperature step interval within a preset temperature range of the terminal device has a corresponding clock trim temperature compensation value within a target compensation value range.

It can be understood that in the traditional clock calibration scheme, the calibration duration for the terminal device to perform clock calibration is relatively short, or the calibration duration is relatively random, when services such as calling, Internet access, or WiFi are running on the terminal device, the terminal device enters a certain temperature range due to operating heat, and then clock frequency calibration for that temperature range is started. However, as the service is interrupted, the temperature of the terminal device may drop, irregular temperature rise duration or temperature drop duration, or rapid temperature increase or rapid temperature decrease, i.e., calibration is completed within a short time, then the terminal device cannot sample enough calibration parameters, and a temperature curve model required for calibration cannot be accurately established, finally resulting in incorrect trim temperature compensation values Therefore, in the cooling driving or heating driving adjustment, calibration temperature step control and calibration duration control also need to be performed to improve the accuracy of clock frequency compensation.

In some cases, when the terminal device is in the temperature control adjustment mode, the temperature of the terminal device is sampled, and then based on the temperature sampling result, the temperature of the terminal device during cooling driving or heating driving is controlled to change stepwise at a preset interval. At the same time, the clock trim temperature compensation value of the terminal device is collected, including the trim value and temperature-related trim compensation values, upon the condition that the clock trim temperature compensation value of the terminal device does not meet the preset condition, the clock calibration duration of the terminal device in the current temperature range is adjusted, and clock trim compensation adjustment is performed on the terminal device based on the adjusted clock calibration duration, until each temperature step interval within the preset temperature range of the terminal device has a corresponding clock trim temperature compensation value within the target compensation value range, thereby improving the accuracy of clock frequency compensation.

Exemplarily, the temperature of the terminal device is sampled and detected in real time, if the temperature sampling result indicates that the temperature step change exceeds the preset interval of 0.5°C, then the temperature is always changed in steps of 0.5°C by adjusting the heating power control or cooling frequency. At the same time, the clock trim temperature compensation value of the terminal device is collected, if no corresponding clock trim temperature compensation value is generated, or the generated clock trim temperature compensation value is not monotonic or linear, or the generated clock trim temperature compensation value differs significantly from the reference value, then the clock calibration duration in the current temperature range is adjusted, and clock trim compensation adjustment is performed based on the adjusted clock calibration duration, until within the temperature range of -30°C to 85°C, each 0.5°C temperature step interval generates a clock trim temperature compensation value within the target compensation value range.

It should also be noted that the above embodiment describes performing temperature control adjustment after trim compensation adjustment to obtain the optimal calibration parameters, in addition, temperature control adjustment may also be combined with other adjustment modes to jointly adjust the clock frequency, and the embodiments of the present application do not limit this.

In some embodiments, the adjustment mode is a multi-frequency joint adjustment mode, and performing clock trim compensation adjustment on the terminal device based on the adjustment mode includes at least one of steps S510 to S530.

At step S510: first trim values of the terminal device in different communication systems are obtained, an optimal value is selected from the first trim values corresponding to different communication systems as a target trim value, and clock trim compensation adjustment is performed on the terminal device based on the target trim value.

At step S520: second trim values of the terminal device in different frequency bands of a target communication system are obtained, an optimal value is selected from the second trim values corresponding to different frequency bands as a target trim value, and clock trim compensation adjustment is performed on the terminal device based on the target trim value.

At step S530: groups of third values the terminal device in different communication systems are obtained, wherein the group of third trim values corresponding to one communication system includes a plurality of third trim values corresponding to different frequency bands, an optimal value is selected from the plurality of third trim values as a target trim value, and clock trim compensation adjustment is performed on the terminal device based on the target trim value.

It should be understood that when it is detected that the current positioning performance of the terminal device is poor and related to the communication frequency band, the terminal device enters the multi-frequency joint adjustment mode and performs corresponding adjustment operations. Referring to FIG. 5, FIG. 5 shows a schematic diagram of a multi-frequency joint adjustment mode provided by embodiments of the present application, as shown in FIG. 5, the multi-frequency joint adjustment mode includes multi-mode clock calibration, multi-frequency clock calibration, and multi-satellite clock calibration.

Traditional crystal oscillator calibration is generally based on a fixed system, such as LTE, due to the short acquisition time or interference affecting the RX of that LTE frequency band, the clock calibration result is inaccurate. Therefore, in the multi-mode clock calibration in step S510, multi-mode joint clock calibration is adopted, crystal oscillator calibration is performed on multiple communication systems respectively to obtain a plurality of first trim values of the terminal device in different communication systems, such as performing clock calibration on LTE, WCDMA, and NR respectively to obtain three first trim values: TrimL, TrimW, and TrimN. Finally, an optimal value is selected from the three first trim values as the target trim value, and clock trim compensation adjustment is performed on the terminal device based on the target trim value. In some cases, the three first trim values TrimL, TrimW, and TrimN are compared, if the three first trim values are close or identical, any one is taken; if the three first trim values differ greatly, the first trim values are loaded onto the terminal device in sequence, and then the positioning performance and communication performance of the terminal device based on each first trim value are detected, finally, the first trim value that provides the best positioning performance and communication performance of the terminal device is selected as the target trim value, and clock trim compensation adjustment is performed on the terminal device based on the target trim value.

Traditional crystal oscillator calibration is generally based on a fixed frequency band, such as LTE B1, due to the short acquisition period or interference affecting the RX of that frequency band, the clock calibration result is inaccurate, therefore, in the multi-frequency clock calibration in step S520, multi-frequency joint clock calibration is adopted, crystal oscillator calibration is performed on different frequency bands of the target communication system to obtain multiple second trim values of the terminal device in different frequency bands of the target communication system, such as performing clock calibration on LTE B5, B1, and B41 (low, middle, and high frequencies) respectively to obtain three second trim values: TrimL, TrimM, and TrimH, finally, an optimal value is selected from the three second trim values as the target trim value, and clock trim compensation adjustment is performed on the terminal device based on the target trim value, specifically, the three second trim values TrimL, TrimM, and TrimH are compared, if the three second trim values are close or identical, any one is taken, if the three second trim values differ greatly, the second trim values are loaded onto the terminal device in sequence, and then the positioning performance and communication performance of the terminal device based on each second trim value are detected, finally, the second trim value that provides the best positioning performance and communication performance of the terminal device is selected as the target trim value, and clock trim compensation adjustment is performed on the terminal device based on the target trim value.

The trim compensation values obtained by traditional coarse calibration, fine calibration, or live-network calibration are all based on the same fixed frequency band, such as GPS L1; but in practice, whether this trim compensation value is suitable for GPS L2 and L5 is unknown. Therefore, in the multi-satellite frequency band clock calibration in step S530, third trim value groups of the terminal device under different communication systems are obtained, the third trim value group corresponding to each communication system includes multiple third trim values corresponding to different frequency bands, an optimal value is selected from the multiple third trim values as the target trim value, and clock trim compensation adjustment is performed on the terminal device based on the target trim value, for example, crystal oscillator calibration is performed under GPS L1, L2, L5 and LTE B5, B1, and B41, the positioning performance of multi-frequency GPS and the frequency error of multi-frequency cellular are detected, and finally the optimal value is selected from the calibrated third trim values as the target trim value, so that after clock trim compensation adjustment is performed on the terminal device based on the target trim value, the above GPS frequency bands and communication systems can be compatible.

In some embodiments, the adjustment mode is a cumulative error adjustment mode, and performing clock trim compensation adjustment on the terminal device based on the adjustment mode includes step S610 or step S620.

At step S610, a first radio frequency module of the terminal device is controlled to transmit a signal and a second radio frequency module is controlled to collect the signal transmitted by the first radio frequency module, and self-calibration is performed on a clock trim compensation value of the terminal device based on the signal transmitted by the first radio frequency module and the signal collected by the second radio frequency.

At step S620, clock recalibration is performed on the terminal device to obtain clock calibration parameters, and clock trim compensation adjustment is performed on the terminal device based on the clock calibration parameters after recalibration.

It can be understood that during the use of the terminal device, due to the inherent characteristics of the crystal, the longer the usage time, the larger the clock error. When the error exceeds a certain threshold range, the cellular or positioning module may not work properly; alternatively, due to poor performance of the crystal itself, its resonant frequency stability is poor, and the drift caused by time variation becomes increasingly large, resulting in frequency deviation again after a period of use; alternatively, the power supply voltage supplied to the Voltage Controlled Oscillator (VCO), frequency multiplier, and other circuits is unstable and drifts too much over time, also causing frequency offset. Referring to FIG. 6, FIG. 6 shows a schematic diagram of a cumulative error adjustment mode provided by embodiments of the present application, as shown in FIG. 6, the embodiments of the present application propose self-transmitting and self-receiving calibration adjustment and reset correction adjustment for the above clock offset phenomena, thereby solving the problem of cumulative clock frequency deviation caused by long-term operation and work of the terminal device.

In self-transmitting and self-receiving calibration adjustment in step S610, when the cumulative clock frequency error exceeds a preset range, the first radio frequency module of the terminal device is controlled to transmit a signal and the second radio frequency module is controlled to collect the signal transmitted by the first radio frequency module, and self-calibration processing is performed on the clock trim compensation value of the terminal device based on the signal transmitted by the first radio frequency module and the signal collected by the second radio frequency module. Exemplarily, the terminal RF chip is started to enter a continuous transmission state, transmitting a signal at a fixed level Ra at a frequency point fa, while another RF module is controlled to enter a continuous reception state, collecting the received signal at the frequency point fa and its offset value, and thereby performing clock calibration on the crystal oscillator again to obtain a clock trim compensation value. If the interference noise of the clock chip is large, different clock duty cycles may be adjusted for crystal oscillator calibration; if the clock frequency is sensitive, other frequency points fb can be entered for crystal oscillator calibration; if the calibration accuracy of the level Ra cannot meet the requirements, the reception level may be adjusted to Rb, Rc, or Rd for crystal oscillator calibration, for example, if the initial reception level Ra is -45 dBm, then Rb, Rc, or Rd may be -50 dBm, - 55 dBm, -60 dBm, etc., that is, the cumulative clock frequency error is corrected and adjusted again by variable signal source frequency points and reference power, and clock self-calibration without instruments is achieved by self-transmitting and self-receiving calibration adjustment.

It should be understood that as the working time of the terminal device increases, its cumulative clock error becomes larger and larger, the cellular network searching speed becomes lower and lower, the positioning accuracy becomes lower, and the positioning speed also becomes lower, at this time, the clock parameters of each constituent unit are already disordered, and single calibration or single-parameter calibration can no longer meet the requirements., therefore, in the reset correction adjustment in step S620, all calibration parameters in the terminal device need to be reset or restored, and clock calibration is performed on the terminal device again to obtain various clock calibration parameters, clock trim compensation adjustment is performed on the terminal device based on the various clock calibration parameters after recalibration, taking resetting the clock parameters to zero as an example, coarse calibration, fine calibration, live-network self-calibration, extreme temperature calibration, and multi-frequency multi-mode calibration are sequentially performed on the crystal oscillator, and all calibration parameters are rewritten into the specific clock registers of the terminal device, after that, based on the recalibrated clock parameters, cellular frequency error, network searching delay, or positioning performance are detected, and the clock parameters are corrected and adjusted in real time until the clock frequency deviation meets the requirements.

It should be understood that the clock frequency parameter may be reset at regular intervals by setting a reset period, or the clock frequency parameter may be reset when it is detected that the positioning accuracy exceeds a range.

In some embodiments, the adjustment mode includes a multi-scenario adjustment mode, and performing clock trim compensation adjustment on the terminal device based on the adjustment mode includes step S710.

At step S710, a target trim value corresponding to current scenario of the terminal device is obtained from a pre-built clock information library, and clock trim compensation adjustment is performed on the terminal device based on the target trim value.

It can be understood that the current scenario of the terminal device is determined based on the obtained scenario detection information, and a corresponding target trim value is obtained from the pre-built clock information library based on the current scenario of the terminal device, then, clock trim compensation adjustment is performed on the terminal device based on the target trim value, so as to perform clock trim adjustment based on different positioning scenarios, and achieve dynamic frequency deviation adjustment even in special scenarios.

In an embodiment, when it is detected that the current positioning performance of the terminal device is poor, and the poor positioning performance is not related to calibration factors but is caused by special working scenarios, the terminal device enters the multi-scenario adjustment mode and performs corresponding clock trim compensation adjustment based on the multi-scenario adjustment mode.

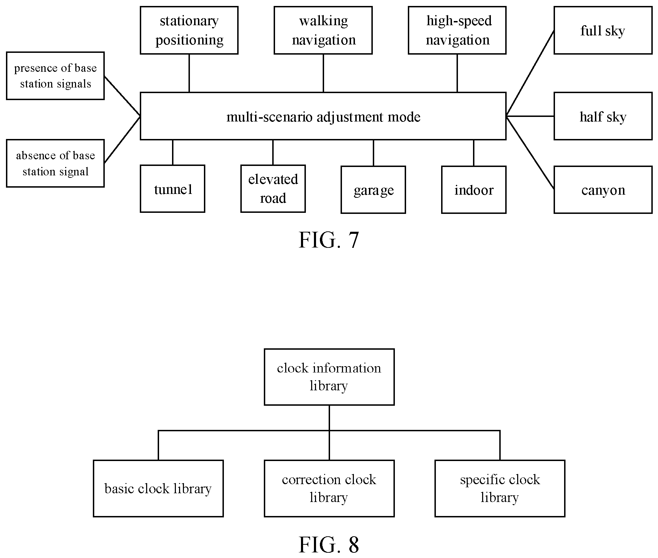

In some cases, the current scenario of the terminal device is determined based on the scenario detection information, including cellular signal scenario, terminal sky state, or terminal motion state, multi-scenario adjustment is performed based on the cellular signal scenario, terminal sky state, or terminal motion state. Referring to FIG. 7, FIG. 7 shows a multi-scenario adjustment mode. As shown in FIG. 7, in the multi-scenario adjustment mode, the cellular signal scenario includes the presence or absence of base station signals and the strength of base station signals, if the terminal device has no base station signal or weak base station signals, independent GPS positioning is prioritized, and trim adjustment needs to be strengthened to enhance positioning capability, the terminal sky state includes full sky state, half sky state, canyon state, or tunnel, elevated road, garage, and indoor states, the deeper the occlusion state, the worse the positioning environment, at this time, high-precision positioning needs to be maintained, and the clock accuracy of positioning parameters needs to be improved, therefore, more refined trim adjustment may be started to enhance positioning capability. The terminal motion state includes stationary state, walking state, running state, cycling state, driving state, and high-speed state, the faster the motion state changes, the higher the clock accuracy required for positioning, at this time, high-precision positioning needs to be maintained, and the clock accuracy of positioning parameters needs to be improved, therefore, more refined trim adjustment may be started to enhance positioning capability. Exemplarily, the default clock trim value in the terminal device corresponds to a clock frequency deviation of 2 ppm, which is applicable to a stationary state scenario or a full sky scenario, when the terminal device is in a moving state scenario, canyon, or elevated road scenario, the clock frequency deviation of 2 ppm is no longer applicable, and the clock frequency accuracy needs to be improved to a 1.5 ppm deviation, if the terminal device is in a tunnel scenario, where the GPS signal further weakens, the clock frequency accuracy needs to be improved to a 1 ppm deviation. In practical applications, a clock information library storing clock frequency calibration values of the terminal device under different scenarios may be pre-built, after the terminal device enters the multi-scenario adjustment mode, the corresponding target trim value is retrieved from the pre-built clock information library and clock trim compensation adjustment is performed on the terminal device.

In one embodiment, prior to obtaining the positioning performance parameter of the terminal device, the clock frequency adjustment method further includes that: a clock information library is built, wherein the clock information library includes a basic clock library, a correction clock library, and a specific clock library, the basic clock library contains clock frequency adjustment values of the terminal device before leaving the factory, the correction clock library contains clock frequency adjustment values generated during clock trim compensation adjustment of the terminal device, and the specific clock library contains clock frequency adjustment values applicable to the terminal device under different scenarios or requirements.

It can be understood that the clock information library is used for storing, reading, and invoking clock frequency parameters under different scenarios and conditions, the corresponding clock frequency adjustment values may be obtained from the clock information library by table lookup, polling, or library file reading. Referring to FIG. 8, FIG. 8 shows a schematic diagram of a clock information library provided by embodiments of the present application. As shown in FIG. 8, the clock information library consists of three parts, i.e., the basic clock library, the correction clock library, and the specific clock library. For the basic clock library, the clock frequency adjustment values before leaving the factory have different influencing factors, and the clock frequency errors or offsets also differ, the calibration parameter values of a certain number of terminal devices are arranged, and the mean, lower limit value, upper limit value, and optimal recommended value are extracted and stored in the basic clock library, the correction clock library is a supplement and correction to the basic clock library, storing clock frequency adjustment values learned, adjusted, and extracted in real time during the use and operation of the terminal device, the specific clock library is a specific library file for the terminal device under different application scenarios and requirements, such as a high-precision positioning clock library, a high-temperature clock library, and a low-temperature clock library.

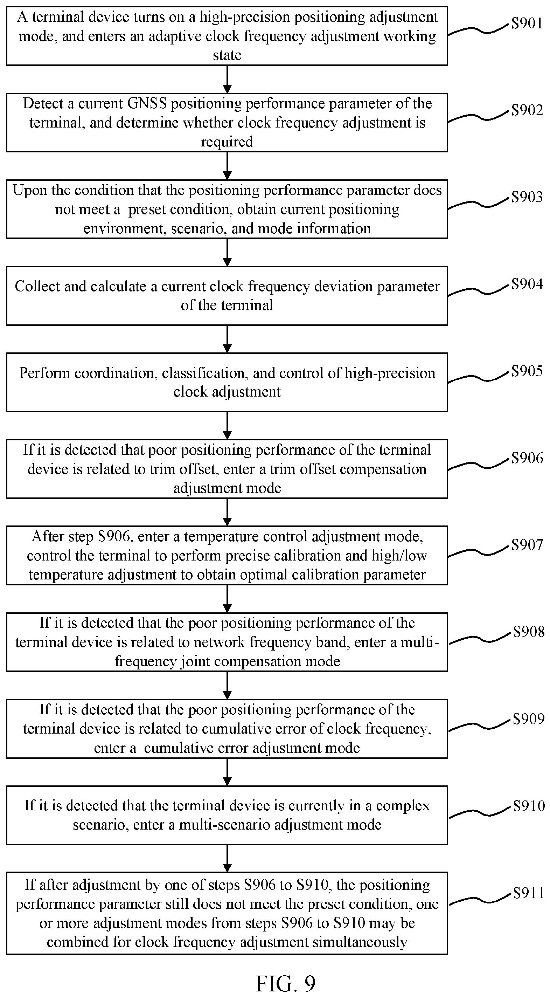

Referring to FIG. 9, FIG. 9 shows a schematic flowchart of a clock frequency adjustment method provided in embodiments of the present application, as shown in FIG. 9, the clock frequency adjustment method includes the following steps.

At step S901, a terminal device turns on a high-precision positioning adjustment mode and enters an adaptive clock frequency adjustment working state.

At step S902,a current GNSS positioning performance parameter of the terminal is detected, and whether clock frequency adjustment is required is determined.

At step S903, upon the condition that the positioning performance parameter does not meet the preset condition, the current positioning environment, scenario, and mode information are obtained.

At step S904, a current clock frequency deviation parameter of the terminal is collected and calculated.

At step S905, coordination, classification, and control of high-precision clock adjustment are performed based on the current positioning environment, scenario, mode information, and clock frequency deviation parameter.

At step S906, if it is detected that the poor positioning performance of the terminal device is related to trim offset, a trim offset compensation adjustment mode is entered.

At step S907, after step S906, a temperature control adjustment mode is entered, the terminal is controlled to perform precise calibration and high/low temperature adjustment to obtain an optimal calibration parameter.

At step S908, if it is detected that the poor positioning performance of the terminal device is related to the network frequency band, a multi-frequency joint compensation mode is entered.

At step S909, if it is detected that the poor positioning performance of the terminal device is related to the cumulative error of the clock frequency, enter the cumulative error adjustment mode.

At step S910, if it is detected that the terminal device is currently in a complex scenario, a multi-scenario adjustment mode is entered.

At step S911, if after performing adjustment by one of steps S906 to S910, the positioning performance parameter still does not meet the preset condition, one or more adjustment modes from steps S906 to S910 may be combined for clock frequency adjustment simultaneously.

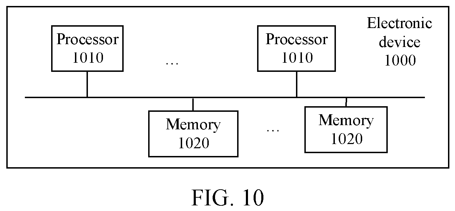

Embodiments of the present application also provide an electronic device, as shown in FIG. 10, the electronic device 1000 includes: one or more processors 1010; a memory 1020 having stored thereon one or more programs, the one or more programs, when executed by the one or more processors 1010, cause the one or more processors 1010 to implement the clock frequency adjustment method.

The memory 1020, as a non-transitory network system, may be used to store non-transitory software programs and non-transitory computer-executable programs. In addition, the memory 1020 may include a high-speed random access memory, and may also include a non-transitory memory, such as at least one disk storage device, a flash memory device or other non-transitory solid-state storage device. In some implementations, the memory 1020 may include a memory 1020 remotely disposed relative to the processor 1010, and these remote memories 1020 may be connected to the processor 1010 by a network. Examples of the above-mentioned network include, but are not limited to, the Internet, an intranet, a local area network, a mobile communication network, and combinations thereof.

The memory 1020 may be implemented in the form of Read Only Memory (ROM), static storage device, dynamic storage device, or Random Access Memory (RAM). The memory 1020 may store an operating system and other application programs, when the technical solutions provided in the embodiments of this specification are implemented by software or firmware, relevant program codes are stored in the memory 1020 and invoked by the processor 1010 to execute the method in embodiments of the present application.

The processor 1010 may be implemented using a general-purpose CPU (Central Processing Unit), microprocessor, Application Specific Integrated Circuit (ASIC), or one or more integrated circuits, and is used to execute relevant programs to implement the technical solutions provided in embodiments of the present application.

In some embodiments, the electronic device further includes: an input/output interface, configured to implement information input and output; a communication interface, configured to implement communication interaction between the device and other devices, which may be implemented by wired means (such as USB, network cable, etc.) or wireless means (such as mobile network, WiFi, Bluetooth, etc.); a bus, configured to transmit information between various components of the device (such as the processor 1010, the memory 1020, the input/output interface, and the communication interface); wherein the processor 1010, the memory 1020, the input/output interface, and the communication interface may implement communication connections with each other within the device by the bus.

An embodiment of the present application further provides a computer-readable storage medium storing computer-executable instructions, wherein the computer-executable instructions are used to execute the clock frequency adjustment method provided in embodiments of the present application.

An embodiment of the present application further provides a computer program product, including a computer program or computer instruction, the computer program or computer instruction is stored in a computer-readable storage medium, a processor of a computer device reads the computer program or the computer instruction from the computer-readable storage medium, and the processor executes the computer program or the computer instruction, so that the computer device executes the clock frequency adjustment method provided in embodiments of the present application.

The system architecture and application scenarios described in the embodiments of the present application are intended to more clearly illustrate the technical solutions of the embodiments of the present application, and do not constitute a limitation on the technical solutions provided in the embodiments of the present application. Those skilled in the art will appreciate that with the evolution of the system architecture and the emergence of new application scenarios, the technical solutions provided in the embodiments of the present application are equally applicable to similar technical problems.

Those of ordinary skill in the art can understand that all or part of the processes in the above method embodiments may be implemented by computer programs instructing relevant hardware, the computer programs may be stored in a non-volatile computer-readable storage medium, and when executed, may include the processes of the above method embodiments. Any reference to memory, storage, databases, or other media used in the various embodiments provided in the present application may include non-volatile and/or volatile memory. Non-volatile memory may include Read Only Memory (ROM), Programmable ROM (PROM), Electrically Programmable ROM (EPROM), Electrically Erasable Programmable ROM (EEPROM), or flash memory. Volatile memory may include Random Access Memory (RAM) or external cache memory. By way of illustration and not limitation, RAM is available in many forms, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), Rambus Direct RAM (RDRAM), Direct Rambus Dynamic RAM (DRDRAM), and Rambus Dynamic RAM (RDRAM).

It will be appreciated by those skilled in the art that all or some of the steps and systems in the methods disclosed above can be implemented as software, firmware, hardware, and appropriate combinations thereof. Some or all of the physical components can be implemented as software to be executed by a processor, such as a central processor, digital signal processor, or microprocessor, or as hardware, or as an integrated circuit, such as an application specific integrated circuit. Such software can be distributed on computer-readable media, which can include computer storage media (or non-transitory media) and communication media (or transitory media). As is well known to those skilled in the art, the term "computer storage media" includes volatile and nonvolatile, removable and non-removable media implemented in any method or technology for storage of information (such as computer readable instructions, data structures, program modules, or other data). Computer storage media includes, but is not limited to, RAM, ROM, EEPROM, flash memory or other memory technology, CD-ROM, digital versatile discs (DVD) or other optical disk storage, magnetic cassettes, magnetic tape, magnetic disk storage or other magnetic storage devices, or any other medium which can be used to store the desired information and is accessible by a computer. In addition, as is well known to those skilled in the art, communication media typically comprises computer readable instructions, data structures, program modules, or other data in a modulated data signal such as a carrier wave or other transport mechanism, and can include any information delivery media.

Some embodiments of the present application are described above with reference to the accompanying drawings, which is not intended to limit the scope of the present application. Any modification, equivalent replacement and improvement that are made by those skilled in the art without departing the scope and principle of the present application should fall within the scope of claims of the present application.

## Claims

1. A clock frequency adjustment method, comprising:
obtaining a positioning performance parameter of a terminal device;
obtaining, upon the condition that the positioning performance parameter does not meet a preset condition, current terminal state information and/or scenario detection information of the terminal device, and performing compensation adjustment on clock frequency of the terminal device on the basis of the terminal state information and/or the scenario detection information.

2. The method according to claim 1, wherein performing compensation adjustment on the clock frequency of the terminal device on the basis of the terminal state information and/or the scenario detection information comprises:
determining at least one adjustment mode based on the terminal state information and/or the scenario detection information; and
performing clock trim compensation adjustment on the terminal device based on the adjustment mode.

3. The method according to claim 2, wherein the adjustment mode comprises a trim offset compensation mode, and performing clock trim compensation adjustment on the terminal device based on the adjustment mode comprises at least one of the following:
obtaining a board calibration reference range of the terminal device, and upon the condition that a current clock trim value of the terminal device is beyond the board calibration reference range, performing clock trim compensation adjustment on the terminal device by adjusting a variable capacitor of a trim adjustment circuit in the terminal device;
obtaining a chip trim standard value corresponding to a crystal oscillator of the terminal device, and performing clock trim compensation adjustment on the terminal device based on the chip trim standard value;
obtaining a temperature parameter of the terminal device, and performing clock trim compensation adjustment on the terminal device based on the temperature parameter; or
obtaining positioning performance requirement information of the terminal device, and performing clock trim compensation adjustment on the terminal device based on the positioning performance requirement information.

4. The method according to claim 2, wherein the adjustment mode is a temperature control adjustment mode, and performing clock trim compensation adjustment on the terminal device based on the adjustment mode comprises:
performing, upon the condition that a temperature of the terminal device is higher than a first preset temperature threshold, cooling driving on the terminal device and performing clock trim compensation adjustment on the terminal device; or
performing, upon the condition that a temperature of the terminal device is lower than a second preset temperature threshold, heating driving on the terminal device and performing clock trim compensation adjustment on the terminal device.

5. The method according to claim 4, wherein upon the condition that the terminal device is in the temperature control adjustment mode, the method further comprises:
sampling the temperature of the terminal device, and controlling, based on a temperature sampling result, the temperature of the terminal device during cooling driving or heating driving to change in a stepped way at a preset interval; and
adjusting, upon the condition that a clock trim temperature compensation value of the terminal device does not meet a preset condition, a clock calibration duration, and performing clock trim compensation adjustment on the terminal device based on the adjusted clock calibration duration until each temperature step interval within a preset temperature range of the terminal device has a corresponding clock trim temperature compensation value within a target compensation value range.

6. The method according to claim 4, wherein the cooling driving comprises any one or more of: reducing operating frequency of a processor, reducing power of a wireless module, activating an active heat dissipation module, or disabling the wireless module; and the heating driving comprises any one or more of: controlling a cellular module to enter a continuous transmission state, or controlling a WiFi module to enter a continuous transmission state.

7. The method according to claim 2, wherein the adjustment mode comprises a multi-frequency joint adjustment mode, and performing clock trim compensation adjustment on the terminal device based on the adjustment mode comprises at least one of the following:
obtaining first trim values of the terminal device in different communication systems, selecting an optimal value from the first trim values corresponding to the different communication systems as a target trim value, and performing clock trim compensation adjustment on the terminal device based on the target trim value;
obtaining second trim values of the terminal device in different frequency bands of a target communication system, selecting an optimal value from the second trim values corresponding to different frequency bands as a target trim value, and performing clock trim compensation adjustment on the terminal device based on the target trim value; or
obtaining groups of third trim values of the terminal device in different communication systems, the group of third trim values corresponding to one communication system comprising a plurality of third trim values corresponding to different frequency bands, selecting an optimal value from the plurality of third trim values as a target trim value, and performing clock trim compensation adjustment on the terminal device based on the target trim value.

8. The method according to claim 2, wherein the adjustment mode comprises a cumulative error adjustment mode, and performing clock trim compensation adjustment on the terminal device based on the adjustment mode comprises:
controlling a first radio frequency module of the terminal device to transmit a signal and controlling a second radio frequency module to collect the signal transmitted by the first radio frequency module, and performing self-calibration on a clock trim compensation value of the terminal device based on the signal transmitted by the first radio frequency module and the signal collected by the second radio frequency module; or
performing clock recalibration on the terminal device to obtain clock calibration parameters, and performing clock trim compensation adjustment on the terminal device based on the clock calibration parameters after recalibration.

9. The method according to claim 2, wherein the adjustment mode comprises a multi-scenario adjustment mode, and performing clock trim compensation adjustment on the terminal device based on the adjustment mode comprises:
obtaining, from a pre-built clock information library, a target trim value corresponding to a current scenario of the terminal device, and performing clock trim compensation adjustment on the terminal device based on the target trim value.

10. The method according to claim 1, wherein the scenario detection information comprises at least one of the following:
terminal ambient temperature, network environment information, positioning satellite information, terminal motion state information, or terminal scenario information.

11. The method according to claim 2, wherein the terminal state information comprises a clock frequency parameter, and the clock frequency parameter comprises at least one of the following: a coarse calibration clock value, a fine calibration clock value, a self-calibration clock value, an extreme temperature clock value, a cellular frequency error value, a wireless frequency error value, or a multi-frequency positioning frequency error value; and
determining at least one adjustment mode based on the terminal state information and/or the scenario detection information comprises:
comparing a clock frequency deviation parameter with a preset frequency deviation threshold, and determining at least one adjustment mode based on a comparison result.

12. The method according to claim 1, wherein the positioning performance parameter comprises at least one of the following: time to first fix, cold start time, hot start time, a positioning accuracy, a positioning trajectory offset, a number of positioning satellites, or a carrier-to-noise ratio; and the method further comprises:
comparing the positioning performance parameter with a preset positioning performance threshold, and determining whether the positioning performance parameter meets the preset condition based on a comparison result.

13. The method according to claim 1, wherein prior to obtaining the positioning performance parameter of the terminal device, the method further comprises:
building a clock information library, the clock information library comprising a basic clock library, a correction clock library, and a specific clock library, wherein the basic clock library comprises clock frequency adjustment values of the terminal device before leaving the factory, the correction clock library comprises clock frequency adjustment values generated during clock trim compensation adjustment of the terminal device, and the specific clock library comprises clock frequency adjustment values applicable to the terminal device under different scenarios or requirements.

14. An electronic device, comprising:
one or more processors;
a memory having stored thereon one or more programs, wherein the one or more programs, when executed by the one or more processors, causing the one or more processors to implement the method according to any one of claims 1 to 13.

15. A computer-readable storage medium having stored thereon a computer program, wherein the computer program, when executed by a processor, implements the method according to any one of claims 1 to 13.
